# EUROPÄISCHE PATENTSCHRIFT

(11) **EP 1 702 224 B1**
(45) Veröffentlichungstag und Bekanntmachung des Hinweises auf die Patenterteilung: **12.10.2011**
(21) Anmeldenummer: 04802699.1
(22) Anmeldetag: 10.11.2004
(51) Int. Cl.: G02B 1/00

(54) **VERFAHREN UND VORRICHTUNG ZUR JUSTIERUNG DER BEIDEN OBJEKTIVE IN EINER 4PI-ANORDNUNG**
DEVICE AND METHOD FOR ADJUSTING TWO OBJECT LENSES IN A 4PI-SYSTEM
DISPOSITIF ET PROCEDE D'AJUSTAGE DES DEUX OBJECTIFS DANS UN SYSTEME 4PI

(30) Priorität: 08.01.2004 DE 102004001441
(43) Veröffentlichungstag der Anmeldung: 20.09.2006
(73) Patentinhaber: Leica Microsystems CMS GmbH, 35578 Wetzlar (DE)
(72) Erfinder: RYGIEL, Reiner, 67122 Altrip (DE)
(74) Vertreter: Naumann, Ulrich
(86) Internationale Anmeldenummer: PCT/DE2004/002482
(87) Internationale Veröffentlichungsnummer: WO 2005/069041

(56) Entgegenhaltungen:
- DE-A1- 19 914 049
- US-E1- R E38 307

## Beschreibung

Die Erfindung betrifft ein Verfahren und eine Vorrichtung zur Justierung der beiden Objektive in einer 4Pi-Anordnung eines vorzugsweise konfokalen Scanmikroskops, wobei mindestens eines der Objektive relativ zu dem anderen Objektiv bewegbar ist.

In 4Pi-Anwendungen müssen immer zwei Objektive, die einander bezüglich einer Fokusebene gegenüber liegen und in orthogonaler Strahlachse zur Fokusebene stehen, derart ausgerichtet werden, dass sich ihre Fokusse jeweils genau in einem Punkt innerhalb der Fokusebene treffen. Nur bei dieser exakten Positionierung der beiden Objektive zueinander ist es möglich, qualitativ hochwertige und fehlerfreie Aufnahmen zu erstellen.

Derzeit sind nur sehr wenige Verfahren und Vorrichtungen der eingangs genannten Art bekannt. Bei den bekannten Verfahren steht eines der beiden Objektive örtlich fest, während das andere Objektiv manuell in x-, y- und z-Richtung verschoben wird. x und y bezeichnen dabei konventionellerweise die Ebene orthogonal zur Strahlachse, und die z-Richtung ist in Richtung der Strahlachse definiert. Bei den bekannten Verfahren wird ein Strahlengang aus dem 4Pi-Aufbau ausgekoppelt und der interferometrische Aufbau der 4Pi-Anordnung genutzt. Im Konkreten wird das interferometrische Bild beobachtet und das bewegbar angeordnete Objektiv in x- und in y-Richtung solange verschoben, bis sich ein Bild einstellt, das die nullte Ordnung zeigt.

Das bekannte Verfahren ist unter zahlreichen Gesichtspunkten problematisch. So kann zum einen die beschriebene Vorgehensweise nur für eine Justierung der beiden Objektive in x- und y-Richtung angewendet werden, wohingegen die Justierung in z-Richtung ein gänzlich anderes Verfahren erfordert. Für die Praxis bedeutet das, dass ein Benutzer während der Justage zwischen beiden Verfahren wechseln muss, was für ihn mit einem großen Zeitverlust verbunden ist. Zudem ist nachteilig, dass der Zustand, in dem die beiden Objektive exakt zueinander justiert sind, beispielsweise aufgrund von Drifts oder Vibrationen nicht über längere Zeit stabil bleibt. Das hat zur Folge, dass die Bildaufnahme nur in dem Zeitraum möglich ist, in dem die abgeschlossene Justage gerade stabil ist. Bei einer auftretenden Dejustage muss der Messvorgang abgebrochen werden, die beiden Objektive müssen erneut exakt zueinander ausgerichtet werden, und erst dann kann die Messung fortgesetzt werden. Nicht zuletzt dieser komplizierten und zeitaufwendigen Justierung, die zudem ein hohes Maß an Kenntnissen und Erfahrung erfordert, ist es zuzuschreiben, dass der 4Pi-Mikroskopie bislang der große Durchbruch im Hinblick auf eine routinemäßige Anwendung versagt geblieben ist.

Aus der DE 199 14 049 A1 sind eine gattungsbildende Vorrichtung und ein gattungsbindendes Verfahren zur Justierung der beiden Objektive in einer 4Pi-Anordnung eines vorzugsweise konfokalen Laserscanmikroskops bekannt. Dabei ist mindestens eines der Objektive relativ zu dem anderen Objektiv bewegbar, ist nämlich mittels Aktoren justierbar.

Zur Justierung der Objektive ist ein interferometrischer Hilfsstrahlengang erforderlich. Wollte ein Fachmann die Justierung vereinfachen, würde er versuchen, die Auswertung des interferometrischen Bildes zu automatisieren.

Der vorliegenden Erfindung liegt nun die Aufgabe zugrunde, ein Verfahren und eine Vorrichtung zur Justierung der beiden Objektive in einer 4Pi-Anordnung der eingangs genannten Art derart auszugestalten und weiterzubilden, dass eine einfache und ohne spezielle Kenntnisse benutzerseitig durchführbare Justierung möglich ist.

Erfindungsgemäß wird die voranstehende Aufgabe hinsichtlich eines Verfahrens zur Justierung der beiden Objektive in einer 4Pi-Anordnung durch ein Verfahren mit den Merkmalen des Patentanspruchs 1 gelöst. Danach ist ein Verfahren der eingangs genannten Art derart ausgestaltet, dass ein Referenzobjekt in den Pupillen der Objektive abgebildet wird, dass aus den Abbildungen des Referenzobjekts für jedes Objektiv ein eigenes Fourier-Bild erzeugt wird und dass durch Bewegen zumindest eines der Objektive relativ zu dem anderen die beiden Fourier-Bilder des Referenzobjekts zur Deckung gebracht werden.

Des Weiteren ist die obige Aufgabe im Hinblick auf eine Vorrichtung zur Justierung der beiden Objektive in einer 4Pi-Anordnung durch eine Vorrichtung mit den Merkmalen des Patentanspruchs 14 gelöst. Danach ist eine Vorrichtung der eingangs genannten Art derart ausgestaltet, dass zur Abbildung eines Referenzobjekts in den Pupillen der Objektive eine Beleuchtungseinrichtung und optische Einkoppelmittel vorgesehen sind, dass aus den Abbildungen des Referenzobjekts für jedes Objektiv ein eigenes Fourier-Bild erzeugbar ist und dass durch Bewegen zumindest eines der Objektive relativ zu dem anderen die beiden Fourier-Bilder des Referenzobjekts zur Deckung bringbar sind.

In erfindungsgemäßer Weise ist zunächst erkannt worden, dass in der 4Pi-Mikroskopie insbesondere der Vereinfachung der Justierung der Objektive eine ganz entscheidende Bedeutung zukommt. Diese Vereinfachung ist erfindungsgemäß dadurch realisiert, dass ein Referenzobjekt in den Pupillen der Objektive abgebildet wird und dass aus den Abbildungen des Referenzobjekts für jedes Objektiv ein eigenes Fourier-Bild erzeugt wird. Mit dem Fourier-Bild ist ein optisch sehr sauberes Instrument geschaffen, mit dem die exakte Ausrichtung der Objektive zueinander ganz einfach dadurch realisiert werden kann, dass zumindest eines der Objektive relativ zu dem anderen solange bewegt wird, bis sich die beiden aus den beiden Objektiven stammenden Fourier-Bilder des Referenzobjekts einander genau überdecken. Aufgrund der hohen Sensitivität, die durch Ausnutzung der Fourier-Bilder erreicht wird, kann die exakte Ausrichtung der beiden Objektive zueinander zudem über einen langen Zeitraum beibehalten werden, so dass mit einer sehr langen stabilen 4Pi-Bildaufnahme zu rechnen ist. Schließlich ist gegenüber den bekannten Verfahren und Vorrichtung ein Vorteil dahingehend geschaffen, dass die Objektive sowohl in der x, y-Ebene als auch in der z-Richtung im Wesentlichen in gleicher Weise justiert werden können. Das erfindungsgemäße Verfahren erfordert noch nicht einmal den Ausbau der Probe oder sonstige störende Eingriffe in das Mikroskop selbst.

In besonders vorteilhafter Weise könnte das Referenzobjekt eine zweidimensionale Struktur aufweisen, so dass im Fourier-Bild Beleuchtungsverteilungen sowohl entlang der x-Achse als auch entlang der y-Achse auftreten. Im Hinblick auf eine gute Auswertbarkeit der Fourier-Bilder und insbesondere, um im Fourier-Bild entlang der x-Achse und entlang der y-Achse dieselbe Beleuchtungsverteilung zu erhalten, könnte das Referenzobjekt bevorzugt als Kreuzblende ausgeführt sein.

Zur Vermeidung möglichst jeglichen Eingriffs in den Beleuchtungs- und Detektionsstrahlengang der 4Pi-Anordnung ist es von ganz besonderem Vorteil, das Referenzobjekt außerhalb der 4Pi-Anordnung bereitzustellen.

Als Beleuchtungseinrichtung könnte eine Laserlichtquelle vorgesehen sein, wobei es sich hier insbesondere um eine Infrarot-Laserlichtquelle handeln könnte. Es hat sich gezeigt, dass durch infrarotes Beleuchtungslicht die mikroskopische Bildaufnahme nahezu nicht beeinflusst wird.

Zur Einkopplung des Lichts der Beleuchtungseinrichtung in den 4Pi-Strahlengang könnten ein Strahlteilerwürfel und eine Linse vorgesehen sein. Durch die Verwendung eines Strahlteilerwürfels, vorzugsweise eines 50/50-Strahlteilerwürfels, wird zum einen erreicht, dass das Licht der Beleuchtungseinrichtung problemlos in den 4Pi-Strahlengang einkoppelbar ist, und wird zum anderen erreicht, dass das aus dem 4Pi-Strahlengang wieder austretende Licht nicht vollständig auf das Referenzobjekt bzw. die Beleuchtungseinrichtung zurückgestrahlt wird, sondern zur Untersuchung der Fourier-Bilder bereitgestellt werden kann.

Um das Referenzobjekt in den Pupillen der Objektive abzubilden, ist das Referenzobjekt in vorteilhafter Weise unmittelbar auf der der Beleuchtungseinrichtung zugewandten Seite des Strahlteilerwürfels angeordnet.

In einer konkreten Ausführungsform ist vorgesehen, die Fourier-Bilder mittels einer Linse auf eine Kamera, vorzugsweise auf eine CCD-Kamera, abzubilden. Die aus den beiden Objektiven resultierenden Fourier-Bilder des Referenzobjekts erscheinen dabei ähnlich zweier Fadenkreuze im Kamerabild und können daher auf besonders einfache Weise im Rahmen einer ersten Grobjustierung durch Bewegen mindestens eines der beiden Objektive relativ zu dem anderen Objektiv zur gegenseitigen Überdeckung gebracht werden.

Für eine anschließende hochpräzise Feinjustierung könnte das Überdecken der beiden Fourier-Bilder mittels in der Ebene der Fourier-Bilder platzierter Photodioden kontrolliert werden. Zur einfachen Unterscheidung zwischen horizontal (d.h. in x-Richtung) und vertikal (d.h. in y-Richtung) verlaufenden Beleuchtungsstrukturen im Fourier-Bild werden die Photodioden in vorteilhafter Weise im Raum höherer Ordnung der Fourier-Bilder angeordnet.

In einer bevorzugten Ausführungsform sind zwei Photodioden entsprechend der zweidimensionalen Struktur des Referenzobjekts derart angeordnet, dass die eine Photodiode die vertikalen Strukturen und die andere Photodiode die horizontalen Strukturen der Fourier-Bilder erfasst. Selbstverständlich können auch mehr als zwei Photodioden vorgesehen sein.

Zur Positionierung der Objektive in der x,y-Ebene, wird mindestens eines der Objekte solange verschoben, bis sich an beiden Photodioden jeweils ein maximaler Intensitätswert einstellt. In diesem Fall ist garantiert, dass sich die Fourier-Bilder exakt decken und dass sich die Fokusse der beiden Objektive exakt in einem Punkt innerhalb der Fokusebene treffen. Die mit den jeweiligen maximalen Intensitätswerten der beiden Photodioden korrespondierende x,y-Positionierung der Objektive könnte zum Zwecke einer späteren Abrufbarkeit in einem Permanentspeicher gespeichert werden.

Zur Justierung der Objektive entlang der Strahlachse, d.h. in z-Richtung, könnte mindestens eines der Objektive in Richtung der Strahlachse so verschoben werden, dass das Summensignal der Photodioden einen maximalen Intensitätswert erreicht. Das Summensignal der beiden Photodioden wird nämlich gerade dann maximal, wenn die Fourier-Bilder scharf abgebildet werden, d.h. die Objektive in z-Richtung derart zueinander positioniert sind, dass sich ihre Fokusse genau in einem Punkt der Fokusebene treffen. Auch die mit dem Maximum des Summensignals der beiden Photodioden korrespondierende z-Positionierung der Objektive könnte in einem Permanentspeicher gespeichert werden.

Weichen die Signalintensitäten der Photodioden von den Maximalwerten ab, was gleichbedeutend ist mit einer beispielsweise durch Drift oder Vibration hervorgerufenen Dejustierung der Objektive, so könnte vorgesehen sein, dass die Messung automatisch unterbrochen wird. Für den Grad der nicht mehr tolerierbaren Abweichungen, bei denen die Messung gestoppt werden soll, könnten im Vorfeld einer Messung Grenzwerte festlegbar sein. Das Unterbrechen der Messung könnte dem Benutzer durch ein akustisches und/oder optisches Signal angezeigt werden.

In einer besonders bevorzugten Ausführungsform ist vorgesehen, dass beim Auftreten von Abweichungen der Signalintensitäten der Photodioden vom Maximalwert das Objektiv automatisch nachgeführt wird. Dazu könnten im Konkreten piezoelektrische Verstellelemente an dem Objektiv vorgesehen sein, die in Abhängigkeit der Signalintensitäten der Photodioden ansteuerbar sind. Die Ansteuerung der piezoelektrischen Verstellelemente könnte auch in Abhängigkeit von Auswertedaten einer Bildverarbeitung der Kamerabilder erfolgen.

Das Kontrollieren der Fourier-Bilder und ggf. das Nachführen des Objektivs könnte während einer Messung in regelmäßigen Abständen zyklisch wiederholt werden. Dafür könnte die Messung unterbrochen werden, es ist jedoch ebenfalls denkbar, die Messung weiterlaufen zu lassen. Im zuletzt genannten Fall ist es von besonderem Vorteil, die während einer Messung durchgeführten Bewegungen des Objektivs zu protokollieren. Anhand der protokollierten Daten können ggf. Fehler bei der späteren Bildauswertung korrigiert werden.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigt
- Fig. 1: in einer schematischen Darstellung eine 4Pi-Anordnung sowie die Ankopplung einer erfindungsgemäßen Vorrichtung zur Justierung der beiden Objektive der 4Pi-Anordnung und
- Fig. 2: in einer schematischen Darstellung ein Ausführungsbeispiel einer erfindungsgemäßen Vorrichtung.

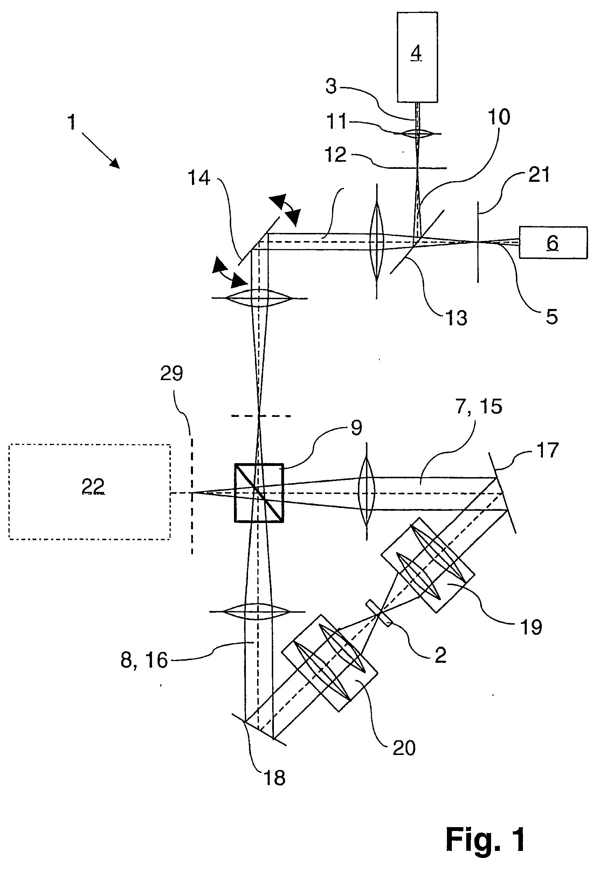

Fig. 1 zeigt - schematisch - eine 4Pi-Anordnung eines konfokalen Scanmikroskops 1 zur Untersuchung eines Objekts 2. Das Scanmikroskop 1 umfasst einen Beleuchtungsstrahlengang 3 einer Laserlichtquelle 4, einen Detektionsstrahlengang 5 eines Detektors 6 und ein den Beleuchtungsstrahlengang 3 in zwei Beleuchtungsteilstrahlengänge 7, 8 aufspaltendes und den Detektionsstrahlengang 5 vereinigendes Bauteil 9.

Das zur Beleuchtung des Objekts 2 dienende Beleuchtungslicht 10 der Lichtquelle 4 wird über eine Linse 11 auf die Anregungslochblende 12 abgebildet. Das die Anregungslochblende 12 passierende Licht wird von dem dichroitischen Strahlteiler 13 in Richtung einer Strahlablenkvorrichtung 14 reflektiert. Die Strahlablenkvorrichtung 14 scannt den Beleuchtungslichtstrahl 10 in zwei im Wesentlichen senkrecht zueinander stehenden Richtungen. Der von der Strahlablenkvorrichtung 14 reflektierte und gescannte Lichtstrahl trifft auf das Bauteil 9, wo er in zwei Teilstrahlen 15, 16 aufgeteilt wird. Das die beiden Teilstrahlen durchlaufende Beleuchtungslicht wird an den Spiegeln 17, 18 reflektiert und über die Mikroskopobjektive 19, 20 von beiden Seiten aus in den gleichen Objektpunkt des Objekts 1 fokussiert. Das Ablenken des Beleuchtungslichtstrahls 10 von der Strahlablenkvorrichtung 14 bewirkt eine Orts-änderung der Beleuchtungsfokusse der beiden Mikroskopobjektive 19, 20, so dass das Objekt 1 zweidimensional in der Fokalebene beleuchtet werden kann.

Das von dem lediglich schematisch gezeichneten Objekt 1 ausgehende Detektionslicht - beispielsweise Fluoreszenz-, Reflexions- oder Transmissionslicht - wird von den beiden Mikroskopobjektiven 19, 20 aufgesammelt und durchläuft die Beleuchtungsstrahlengänge 7, 8 in umgekehrter Richtung. Das vom Mikroskopobjektiv 19 (20) aufgesammelte Detektionslicht wird vom Spiegel 17 (18) in Richtung des den Detektionsstrahlengang 5 vereinigenden Bauteils 9 reflektiert. Das Detektionslicht wird beim Passieren des Bauteils 9 vereinigt und über die Strahlablenkvorrichtung 14, den dichroitischen Strahlteiler 13 in Richtung der Detektionslochblende 21 geleitet. Lediglich wenn Detektionslicht aus dem Beleuchtungsfokus der beiden Mikroskopobjektive 19, 20 stammt, kann dieses Detektionslicht die Detektionslochblende 21 passieren, da die Detektionslochblende 21 gemäß dem konfokalen Prinzip in einer zum Beleuchtungsfokus der beiden Mikroskopobjektive 19, 20 optisch korrespondierenden Ebene angeordnet ist. In gleicher Weise ist die Anregungslochblende 12 in einer optisch korrespondierenden Ebene zu dem gemeinsamen Beleuchtungsfokus der beiden Mikroskopobjektive 19, 20 angeordnet.

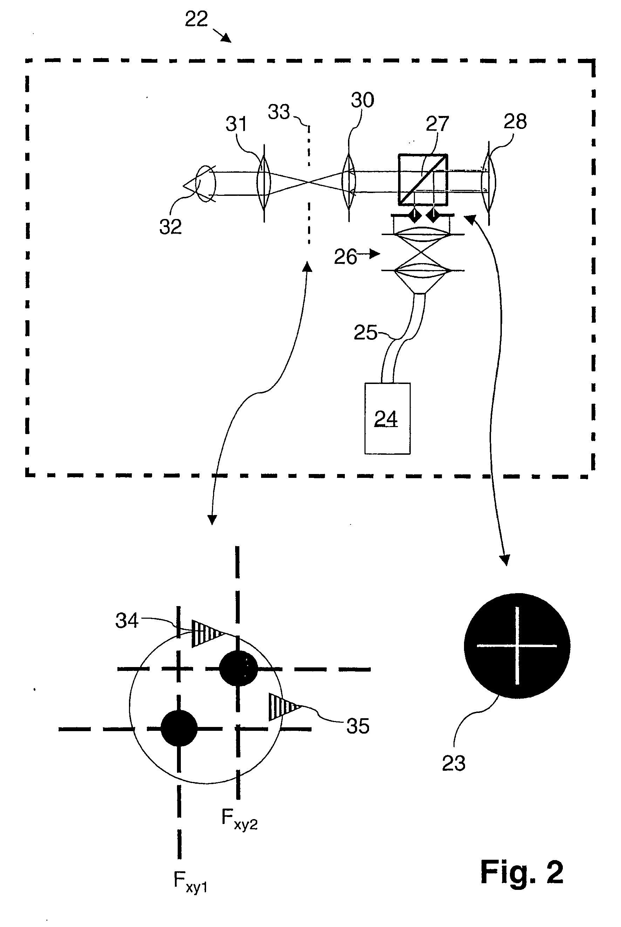

Zur exakten Ausrichtung der beiden Mikroskopobjektive 19, 20 derart, dass sich die Fokusse der beiden Mikroskopobjektive 19, 20 exakt in einem Punkt in der Fokusebene treffen, dient die in Fig. 1 lediglich schematisch angedeutete und mit dem Bezugszeichen 22 versehene erfindungsgemäße Vorrichtung, die in Fig. 2 in größerem Detail dargestellt ist.

Fig. 2 zeigt schematisch den konkreten Aufbau eines Ausführungsbeispiels einer erfindungsgemäßen Vorrichtung zur Justierung der beiden Mikroskopobjektive 19, 20 in einer 4Pi-Anordnung eines konfokalen Scanmikroskops 1. Eine Kreuzblende 23, die im unteren rechten Teil von Fig. 2 vergrößert dargestellt ist, wird erfindungsgemäß in den Pupillen der Mikroskopobjektive 19, 20 abgebildet. Dazu wird das Beleuchtungslicht einer Infrarot-Laserlichtquelle 24 über eine Lichtleitfaser 25 auf ein geeignetes Linsensystem 26 geführt, so dass die Kreuzblende 23 vollständig und gleichmäßig ausgeleuchtet wird. Die Kreuzblende 23 liegt auf der der Beleuchtungslichtquelle 24 zugewandten Seite eines 50/50-Strahltellerwürfels 27 (BSC Pol Ir). Über eine Abbildungslinse 28 wird das Beleuchtungslicht an dem Bauteil 9 in die 4Pi-Anordnung eingekoppelt, so dass in der Ebene 29 ein Zwischenbild der Kreuzblende 23 entsteht und diese in den Pupillen der Mikroskopobjektive 19, 20 abgebildet wird. Das aus der 4Pi-Anordnung wieder austretende Licht durchdringt den Strahlteilerwürfel 27 und wird über eine Linse 30 in eine zweidimensionale Fourier-Transformierte der Kreuzblende 23 abgebildet. Aufgrund der oben beschriebenen Strahlführung ergibt sich für jedes der beiden Mikroskopobjektive 19, 20 ein eigenes Fourier-Bild der Kreuzblende 23. Eine weitere Linse 31 dient zur Abbildung der Fourier-Transformierten auf eine CCD-Kamera 32.

Die optischen Verhältnisse in der Ebene 33 der Fourier-Transformierten sind im linken unteren Teil von Fig. 2 im Detail dargestellt. Zu erkennen sind zwei gegeneinander verschobene Fourier-Bilder der Kreuzblende 23, wobei das mit Fxy1 bezeichnete Fourier-Bild aus der Abbildung der Kreuzblende 23 in die Pupille des Mikroskopobjektivs 19 und das mit Fxy2 bezeichnete Fourier-Bild entsprechend von Mikroskopobjektiv 20 resultiert. Die in Fig. 2 dargestellte Situation, in der die beiden im Sinne eines Fadenkreuzes erscheinenden Fourier-Bilder gegeneinander verschoben sind, deutet daraufhin, dass die beiden Mikroskopobjektive 19, 20 nicht exakt aufeinander justiert sind. Für eine erste Grobjustierung der beiden Mikroskopobjektive 19, 20 wird in einem ersten Schritt die Kamera 32 zur Kontrollsichtung verwendet, indem der Anwender durch Verschieben des Objektivs 19 - Mikroskopobjektiv 20 ist im vorliegenden Fall ortsfest ausgeführt - die beiden Fourier-Bilder Fxy1 und Fxy2 zur Deckung bringt. Ist dieses Vorgehen vom Anwender abgeschlossen worden, so kann er für eine Feinjustierung in einem zweiten Schritt einen Automatisierungsprozess starten, der im Folgenden beschrieben wird:

In der Ebene 33 der Fourier-Transformierten sind im Raum der höheren Ordnungen zwei Photodioden 34, 35 platziert. Wenn die Mikroskopobjektive 19, 20 ideal zueinander ausgerichtet sind, d.h. bei Superposition von Fxy1 und Fxy2, zeigen beide Photodioden 34, 35 jeweils einen maximalen Intensitätswert. Iterativ kann das verfahrbare Objektiv 19, das über nicht gezeigte piezoelektrische Verstellelemente hochpräzise positioniert werden kann, soweit in x- und in y-Richtung bewegt werden, bis sich ein Maximalwert an den Photodioden 34, 35 einstellt. Um die Verfahrrichtung zu erkennen, muss das Objektiv 19 entweder über den Maximalwert hinaus verfahren werden, oder aber das Objektiv 19 muss mit ausreichend großer Verfahrweite in beiden Richtungen verschoben werden, bis sich ein Maximalwert einstellt. Der Maximalwert wird zusammen mit den dazugehörigen Positionsdaten des Objektivs 19 in einem nichtflüchtigen Speicher festgehalten. Treten im Verlaufe der Messung Dejustagen der Mikroskopobjektive 19, 20 auf, so werden die gespeicherten Positionsdaten aus dem Speicher abgerufen und entsprechende korrigierende Steuerbefehle an die piezoelektrischen Verstellelemente ausgegeben. Dieser Vorgang kann zyklisch wiederholt werden.

Für die Justierung der Mikroskopobjektive 19, 20 entlang der Strahlachse, d.h. in z-Richtung, besteht die Möglichkeit die Information aus einer scharfen Abbildung der Fourier-Bilder ausnutzen, d.h. es wird das Summensignal der beiden Photodioden 34, 35 verwendet. Dabei nutzt man aus, dass die Fourier-Bilder mehr und mehr verschwimmen, je mehr sich die Objektive 19, 20 aus ihrer exakt justierten z-Position entfernen. Sind die Objektive 19, 20 in z-Richtung zu stark dejustiert, so verschwinden die Fourier-Bilder vollständig. Ein maximales Summensignal ergibt sich folglich bei exakter Justierung der beiden Objektive 19, 20. Um Richtung und Maximum des Summensignals zu erfassen, wird daher das Objektiv 19 ein wenig in positive und negative z-Richtung verschoben. Ist das Maximum des Summensignals gefunden, so wird die dazu gehörende z-Position des Objektivs 19 ebenfalls in einem Speicher abgelegt. Das Objektiv 19 wird sodann an die gespeicherte Position bewegt. Damit ist die Justage des Objektivs 19 in z-Richtung ebenfalls abgeschlossen. Auch dieser Vorgang kann zyklisch wiederholt werden.

Abschließend sei ganz besonders darauf hingewiesen, dass das voranstehend erörterte Ausführungsbeispiel lediglich zur Beschreibung der beanspruchten Lehre dienen, diese jedoch nicht auf das Ausführungsbeispiel einschränkt.

## Patentansprüche

1. Verfahren zur Justierung der beiden Objektive (19, 20) in einer 4Pi-Anordnung eines vorzugsweise konfokalen Scanmikroskops (1), wobei mindestens eines der Objektive (19, 20) relativ zu dem anderen Objektiv (20, 19) bewegbar ist,
**dadurch gekennzeichnet, dass** ein Referenzobjekt in den Pupillen der Objektive (19, 20) abgebildet wird, dass aus den Abbildungen des Referenzobjekts für jedes Objektiv (19, 20) ein eigenes Fourier-Bild erzeugt wird und dass durch Bewegen zumindest eines der Objektive (19, 20) relativ zu dem anderen die beiden Fourier-Bilder des Referenzobjekts zur Deckung gebracht werden.

2. Verfahren nach Anspruch 1, **dadurch gekennzeichnet, dass** die Fourier-Bilder von einer Kamera, vorzugsweise einer CCD-Kamera (32), erfasst werden, wobei
das einander Überdecken der beiden Fourier-Bilder vorzugsweise mittels der Kameraabbildungen der Fourier-Bilder kontrolliert wird.

3. Verfahren nach Anspruch 1 oder 2, **dadurch gekennzeichnet, dass** die Kameraabbildungen der Fourier-Bilder mittels Bildverarbeitungssoftware analysiert werden.

4. Verfahren nach einem der Ansprüche 1 bis 3, **dadurch gekennzeichnet, dass** das einander Überdecken der beiden Fourier-Bilder mittels in der Ebene der Fourier-Bilder platzierter Photodioden (34, 35) überwacht wird, wobei
mindestens eines der Objektive (19) in einer zur Strahlachse der 4Pi-Anordnung orthogonalen Ebene - x, y-Richtung - so verschoben werden kann, dass sich an beiden Photodioden (34, 35) jeweils ein maximaler Intensitätswert einstellt und wobei
die mit den jeweiligen maximalen Intensitätswerten der beiden Photodioden (34, 35) korrespondierende x, y-Positionierung der Objektive (19, 20) gespeichert werden kann.

5. Verfahren nach Anspruch 4, **dadurch gekennzeichnet, dass** mindestens eines der Objektive (19) in Richtung der Strahlachse der 4Pi-Anordnung - z-Richtung - so verschoben wird, dass das Summensignal der Photodioden (34, 35) einen maximalen Intensitätswert erreicht wobei
die mit dem Maximum des Summensignals der beiden Photodioden (34, 35) korrespondierende z-Positionierung der Objektive (19, 20) gespeichert werden kann.

6. Verfahren nach Anspruch 4 oder 5, **dadurch gekennzeichnet, dass** die Messung bei Abweichungen der Signalintensitäten der Photodioden (34, 35) von den Maximalwerten automatisch unterbrochen wird.

7. Verfahren nach einem der Ansprüche 4 bis 6, **dadurch gekennzeichnet, dass** das Objektiv (19) bei Abweichungen der Signalintensitäten der Photodioden (34, 35) von den Maximalwerten automatisch nachgeführt wird.

8. Verfahren nach einem der Ansprüche 2 bis 7, **dadurch gekennzeichnet, dass** das Kontrollieren der Fourier-Bilder und ggf. das Nachführen des Objektivs (19) während einer Messung in regelmäßigen Abständen zyklisch wiederholt wird.

9. Verfahren nach einem der Ansprüche 4 bis 8, **dadurch gekennzeichnet, dass** die während einer Messung durchgeführten Bewegungen des Objektivs (19) protokolliert werden.

10. Vorrichtung zur Justierung der beiden Objektive (19, 20) in einer 4Pi-Anordnung eines vorzugsweise konfokalen Scanmikroskops, wobei mindestens eines der Objektive (19, 20) relativ zu dem anderen Objektiv (20, 19) bewegbar ist, insbesondere zur Durchführung eines Verfahrens nach einem der Ansprüche 1 bis 9,
**dadurch gekennzeichnet, dass** zur Abbildung eines Referenzobjekts in den Pupillen der Objektive (19, 20) eine Beleuchtungseinrichtung (24) und optische Einkoppelmittel (25) vorgesehen sind, dass aus den Abbildungen des Referenzobjekts für jedes Objektiv (19, 20) ein eigenes Fourier-Bild erzeugbar ist und dass durch Bewegen zumindest eines der Objektive (19, 20) relativ zu dem anderen die beiden Fourier-Bilder des Referenzobjekts zur Deckung bringbar sind.

11. Vorrichtung nach Anspruch 10, **dadurch gekennzeichnet, dass** Referenzobjekt eine zweidimensionale Struktur aufweist, wobei das
Referenzobjekt als Kreuzblende (23) ausgeführt und ggf.
außerhalb des 4Pi-Anordnung bereitgestellt ist.

12. Vorrichtung nach Anspruch 10 oder 11, **gekennzeichnet durch** eine Infrarot-Laserlichtquelle (24) als Beleuchtungseinrichtung.

13. Vorrichtung nach einem der Ansprüche 10 bis 12, **gekennzeichnet durch** einen Strahlteilerwürfel (27) und eine Linse (28) als Einkoppelmittel, wobei
das Referenzobjekt unmittelbar auf der der Beleuchtungseinrichtung zugewandten Seite des Strahlteilerwürfels (27) angeordnet sein kann.

14. Vorrichtung nach einem der Ansprüche 10 bis 13, **gekennzeichnet durch** eine Linse (31) zur Abbildung der Fourier-Bilder auf eine Kamera, vorzugsweise auf eine CCD-Kamera (32).

15. Vorrichtung nach einem der Ansprüche 10 bis 14, **dadurch gekennzeichnet, dass** in der Ebene (33) der Fourier-Bilder Photodioden (34, 35) angeordnet sind, wobei
die Photodioden (34, 35) im Raum höherer Ordnung der Fourier-Bilder angeordnet sein können und wobei
zwei Photodioden (34, 35) entsprechend der zweidimensionalen Struktur des Referenzobjektes derart angeordnet sein können, dass die eine Photodiode (34, 35) die vertikalen (x) Strukturen und die andere Photodioden (35, 34) die horizontalen (y) Strukturen der Fourier-Bilder erfasst.

16. Vorrichtung nach einem der Ansprüche 10 bis 15, **dadurch gekennzeichnet, dass** piezoelektrische Verstellelemente zur Bewegung des Objektivs (19) vorgesehen sind, wobei
die piezoelektrischen Verstellelemente in Abhängigkeit der Signalintensitäten der Photodioden (34, 35) und/oder in Abhängigkeit von Auswertedaten der Bildverarbeitungssoftware ansteuerbar sein können.

## Claims

1. A method for adjusting the two objectives (19, 20) in a 4Pi arrangement of a preferably confocal scanning microscope (1), wherein at least one of the objectives (19, 20) is movable relative to the other objective (20, 19), **characterised in that** a reference object in the pupils of the objectives (19, 20) is imaged, **in that** from the imagings of the reference object a separate Fourier image for each objective (19, 20) is generated, and **in that**, by moving at least one of the objectives (19, 20) relative to the other, the two Fourier images of the reference object are bought into register.

2. A method according to claim 1, **characterised in that** the Fourier images are captured by a camera, preferably a CCD camera (32), wherein the superimposition of the two Fourier images is monitored preferably by means of the camera imagings of the Fourier images.

3. A method according to claim 1 or 2, **characterised in that** the camera imagings of the Fourier images are analysed by means of image-processing software.

4. A method according to any one of claims 1 to 3, **characterised in that** the superimposition of the two Fourier images is monitored by means of photodiodes (34, 35) positioned in the plane of the Fourier images, wherein
at least one of the objectives (19) can be displaced in a plane - x, y direction - orthogonal to the beam axis of the 4Pi arrangement in such a manner that a maximum intensity value is reached at each of the two photodiodes (34, 35) and wherein
the x, y positioning of the objectives (19, 20) corresponding to the respective maximum intensity values of the two photodiodes (34, 35) can be stored.

5. A method according to claim 4, **characterised in that** at least one of the objectives (19) is displaced in the direction of the beam axis of the 4Pi arrangement-z-direction - in such a manner that the sum signal of the photodiodes (34, 35) reaches a maximum intensity value, wherein
the z-positioning of the objectives (19, 20) corresponding to the maximum of the sum signal of the two photodiodes (34, 35) can be stored.

6. A method according to claim 4 or 5, **characterised in that** the measurement is automatically interrupted when the signal intensities of the photodiodes (34, 35) vary from the maximum values.

7. A method according to any one of claims 4 to 6, **characterised in that** upon variations of the signal intensities of the photodiodes (34, 35) from the maximum values the objective (19) is automatically repositioned.

8. A method according to any one of claims 2 to 7, **characterised in that** monitoring of the Fourier images and optionally repositioning of the objective (19) is cyclically repeated at regular intervals during a measurement.

9. A method according to any one of claims 4 to 8, **characterised in that** the movements of the objective (19) performed during a measurement are logged.

10. A device for adjusting the two objectives (19, 20) in a 4Pi arrangement of a preferably confocal scanning microscope, wherein at least one of the objectives (19, 20) is movable relative to the other objective (20, 19), in particular by carrying out a method according to any one of claims 1 to 9, **characterised in that** in order to image a reference object in the pupils of the objectives (19, 20) an illuminating system (24) and optical coupling-in means (25) are provided, **in that** from the imagings of the reference object a separate Fourier image for each objective (19, 20) can be generated and **in that**, by moving at least one of the objectives (19, 20) relative to the other, the two Fourier images of the reference object can be brought into register.

11. A device according to claim 10, **characterised in that** the reference object comprises a two dimensional structure, wherein the
reference object is in the form of a cross fade (23) and is optionally provided outside the 4Pi arrangement.

12. A device according to claim 10 or 11, **characterised by** an infrared laser light source (24) as the illuminating system.

13. A device according to any one of claims 10 to 12, **characterised by** a beam splitter cube (27) and a lens (28) as coupling-in means, wherein
the reference object can be arranged directly on the face of the beam splitter cube (27) facing the illuminating system.

14. A device according to any one of claims 10 to 13, **characterised by** a lens (31) for imaging the Fourier images onto a camera, preferably onto a CCD camera (32).

15. A device according to any one of claims 10 to 14, **characterised in that** photodiodes (34, 35) are arranged in the plane (33) of the Fourier images, wherein
the photodiodes (34, 35) can be arranged in a higher-order region of the Fourier images and wherein
two photodiodes (34, 35) can be arranged corresponding to the two-dimensional structure of the reference object in such a manner that the one photodiode (34, 35) captures the vertical (x) structures and the other photodiode (35, 34) captures the horizontal (y) structures of the Fourier images.

16. A device according to any one of claims 10 to 15, **characterised in that** piezoelectric adjusting elements are provided in order to move the objective (19), wherein
the piezoelectric adjusting elements can be actuated on the basis of the signal intensities of the photodiodes (34, 35) and/or on the basis of evaluation data of the image-processing software.

## Revendications

1. Procédé pour l'ajustage des deux objectifs (19, 20) dans un système 4Pi d'un microscope de balayage (1) de préférence à foyer commun, au moins l'un des objectifs (19, 20) pouvant être déplacé par rapport à l'autre objectif (20, 19),
**caractérisé en ce qu'**un objet de référence est représenté dans les pupilles des objectifs (19, 20), **en ce qu'**une image de Fourier propre est générée à partir des représentations de l'objet de référence pour chaque objectif (19, 20) et **en ce que** les deux images de Fourier de l'objet de référence sont mises en recouvrement par déplacement d'au moins l'un des objectifs (19, 20) par rapport à l'autre.

2. Procédé selon la revendication 1, **caractérisé en ce que** les images de Fourier sont enregistrées par une caméra, de préférence une caméra CCD (32), le recouvrement réciproque des deux images de Fourier étant contrôlé de préférence au moyen des représentations par caméra des images de Fourier.

3. Procédé selon la revendication 1 ou 2, **caractérisé en ce que** les représentations par caméra des images de Fourier sont analysées au moyen d'un logiciel de traitement d'images.

4. Procédé selon l'une quelconque des revendications 1 à 3, **caractérisé en ce que** le recouvrement réciproque des deux images de Fourier est contrôlé au moyen de photodiodes (34, 35) placées dans le plan des images de Fourier,
au moins l'un des objectifs (19) étant déplacé dans un plan perpendiculaire à l'axe de faisceau du système 4Pi - direction x, y - de telle sorte qu'à chaque fois une valeur d'intensité maximale s'établit sur les deux photodiodes (34, 35) et
le positionnement x, y des objectifs (19, 20), qui correspond aux valeurs d'intensité maximales respectives des deux photodiodes (34, 35), pouvant être mémorisé.

5. Procédé selon la revendication 4, **caractérisé en ce qu'**au moins l'un des objectifs (19) est déplacé en direction de l'axe de faisceau du système 4Pi - direction z - de telle sorte que le signal cumulé des photodiodes (34, 35) atteint une valeur d'intensité maximale,
le positionnement z des objectifs (19, 20), qui correspond au maximum du signal cumulé des deux photodiodes (34, 35), pouvant être mémorisé.

6. Procédé selon la revendication 4 ou 5, **caractérisé en ce que** la mesure est interrompue automatiquement en cas d'écarts des intensités de signal des photodiodes (34, 35) par rapport aux valeurs maximales.

7. Procédé selon l'une quelconque des revendications 4 à 6, **caractérisé en ce que** l'objectif (19) est asservi automatiquement en cas d'écarts des intensités de signal des photodiodes (34, 35) par rapport aux valeurs maximales.

8. Procédé selon l'une quelconque des revendications 2 à 7, **caractérisé en ce que** le contrôle des images de Fourier et éventuellement l'asservissement de l'objectif (19) sont répétés de façon cyclique pendant une mesure à des intervalles réguliers.

9. Procédé selon l'une quelconque des revendications 4 à 8, **caractérisé en ce que** les déplacements de l'objectif (19), qui sont effectués pendant une mesure, sont consignés.

10. Dispositif pour l'ajustage des deux objectifs (19, 20) dans un système 4Pi d'un microscope de balayage de préférence à foyer commun, au moins l'un des objectifs (19, 20) pouvant être déplacé par rapport à l'autre objectif (20, 19), en particulier pour la mise en oeuvre d'un procédé selon l'une quelconque des revendications 1 à 9,
**caractérisé en ce qu'**un dispositif d'éclairage (24) et des moyens d'injection optiques (25) sont prévus pour représenter un objet de référence dans les pupilles des objectifs (19, 20), de telle sorte qu'une propre image de Fourier peut être générée à partir des représentations de l'objet de référence pour chaque objectif (19, 20) et **en ce que** les deux images de Fourier de l'objet de référence peuvent être mises en recouvrement par déplacement d'au moins l'un des objectifs (19, 20) par rapport à l'autre.

11. Dispositif selon la revendication 10, **caractérisé en ce que** l'objet de référence présente une structure bidimensionnelle,
l'objet de référence étant réalisé sous forme de diaphragme en croix (23) et étant mis à disposition éventuellement à l'extérieur du système 4Pi.

12. Dispositif selon la revendication 10 ou 11, **caractérisé par** une source de lumière laser infrarouge (24) comme dispositif d'éclairage.

13. Dispositif selon l'une quelconque des revendications 10 à 12, **caractérisé par** un cube diviseur de faisceau (27) et une lentille (28) comme moyens d'injection,
l'objet de référence pouvant être disposé directement sur le côté, tourné vers le dispositif d'éclairage, du cube diviseur de faisceau (27).

14. Dispositif selon l'une quelconque des revendications 10 à 13, **caractérisé par** une lentille (31) pour la représentation des images de Fourier sur une caméra, de préférence sur une caméra CCD (32).

15. Dispositif selon l'une quelconque des revendications 10 à 14, **caractérisé en ce que** des photodiodes (34, 35) sont disposées dans le plan (33) des images de Fourier,
les photodiodes (34, 35) pouvant être disposées dans l'espace d'ordre supérieur des images de Fourier et
deux photodiodes (34, 35) pouvant être disposées en fonction de la structure bidimensionnelle de l'objet de référence, de telle sorte que l'une des photodiodes (34, 35) enregistre les structures verticales (x) et les autres photodiodes (35, 34) les structures horizontales (y) des images de Fourier.

16. Dispositif selon l'une quelconque des revendications 10 à 15, **caractérisé en ce que** des éléments de réglage piézoélectriques sont prévus pour le déplacement de l'objectif (19),
les éléments de réglage piézoélectriques pouvant être activés en fonction des intensités de signal des photodiodes (34, 35) et/ou en fonction des données d'analyse du logiciel de traitement d'images.
